Europäisches Patentamt

European Patent Office

Office européen des brevets

(19)

(11) Publication number: 0 409 284 A2

# EUROPEAN PATENT APPLICATION

(12)

(21) Application number: 90114078.0

(22) Date of filing: 23.07.90

(51) Int. Cl.5: G06F 1/00

(30) Priority: 21.07.89 JP 189409/89

(43) Date of publication of application:
23.01.91 Bulletin 91/04

(84) Designated Contracting States:
DE FR GB

(71) Applicant: NEC CORPORATION
7-1, Shiba 5-chome Minato-ku
Tokyo 108-01(JP)

(72) Inventor: Takada, Akira
c/o NEC Corporation, 7-1 Shiba 5-chome
Minato-ku, Tokyo(JP)

(74) Representative: Betten & Reschsch
Reichenbachstrasse 19
D-8000 München 5(DE)

(54) Data processor.

(57) A data processor includes a program memory composed of an electrically programmable read only memory, the program memory including a first region assigned for storing programs and a second region assigned for storing two bits of control information. The data processor also includes a controller receiving the two bits of control information from the second region of the program memory for allowing a content of the first region of the program memory to be outputted from the data processor to an external device only when the two bits of control information stored in the second region of the program memory are different from each other.

FIGURE 1

# DATA PROCESSOR

## Background of the Invention

### Field of the invention

The present invention relates to a data processor, and more specifically to a single chip microcomputer including a processor and an ultra violet erasable electrically programmable read only memory (called "PROM" in the specification) formed on the same semiconductor substrate, the read only memory being used as a program memory.

### Description of related art

In general, a single chip microprocessor comprises a single semiconductor substrate on which there are formed a central processing unit (CPU), a program memory, a data memory, and a peripheral input/output unit including an input/output port. The single chip microprocessor is such that programs constituted of a sequence of instructions stored in the program memory is ordinarily supplied only to the internal CPU and can be never outputted through the input/output port to an external device.

The same is true for the case in which the program memory is constituted of a PROM. However, this type of microcomputer is such that a program is written to the PROM from an external. Namely, a path is provided between the PROM and the input/output port, and the path is made active so as to electrically connect between the PROM and the input/output port in a mode for writing a program into the PROM. This mode will be called a "program mode" hereinafter. With this activation of the path between the PROM and the input/output port, it becomes possible to execute writing of the program into the PROM from an external device. In this connection, it is necessary to verify whether or not the program thus written in the PROM is correct. For this purpose, a verification mode is set, in which the path provided between the PROM and the input/output port is made active, again, so as to electrically connect between the PROM and the input/output port, so that the program written in the PROM is read and outputted through the input/output port to the external device.

As mentioned above, although it is not allowed to output the program written in the PROM to the external device in an ordinary operating mode, if the verification mode is set, it becomes possible to output the content of the PROM to the external device. Therefore, there is possibility that the program written on the PROM is plagiarized by an unauthorized person.

To prevent plagiarism and to protect the program from any unauthorized action, some number of program protection means have been proposed. One of the program protection means is that a verification mode control information storing cell is provided in a PROM and the path provided between the PROM and the input/output port is controlled on the basis of a content of the verification mode control information storing cell. A PROM cell has a threshold which varies upon whether or not it is in a written condition, and data of "1" and "0" is stored by utilizing this phenomenon. A typical example of the PROM cell is a field effect transistor having a floating gate. For example, in the case of the PROM cell composed of an N channel floating gate field effect transistor, if electrons are injected into the floating gate, a threshold changes from a first threshold corresponding to an unwritten condition to a second threshold which is higher than the first threshold and which corresponds to a written condition. Therefore, if an intermediate voltage between the first and second thresholds is applied as a reading voltage, an unwritten PROM cell transistor is turned on, but a written PROM cell transistor is off. ON and OFF of the PROM cell transistor are utilized to correspond to "1" and '0" of data. Accordingly, after a program has been written to the PROM and the written program has been verified, the verification mode control information storing cell is brought into a written condition. If the verification mode is set by an unauthorized person for plagiarism of the program, the content of the verification mode control information storing cell is read out first of all. Since the verification mode control information storing cell is in the written condition, the verification mode control information storing cell will not be turned on, and therefore, data "0" is outputted. As a result, the path between the PROM and the input/output port is disconnected.

Another program protection means is a password system, in which a password storing area is prepared in the PROM, and a password is written into the password storing area after writing and verification of a program have been completed. Thereafter, unless a password identical to that written in the password storing area is inputted, a reading of the program in the verification mode is inhibited.

However, neither of the above mentioned program protection means is satisfactory. Namely, since the reading voltage is ordinarily produced from a supply voltage, if the supply voltage is elevated, it is possible to make the reading voltage higher than the second threshold. As a result, the verification mode control information storing cell is equivalently brought in an unwritten condition, and therefore, it becomes possible to read out the program into an external. In this point, the first program protection means is not satisfactory. On the other hand, the second program protection means is not perfect, since the same password as the written password would be found someday.

Summary of the Invention

Accordingly, it is an object of the present invention to provide a data processor which has overcome the above mentioned defect of the conventional one.

Another object of the present invention is to provide a data processor having a sufficiently high program protection function.

The above and other objects of the present invention are achieved in accordance with the present invention by a data processor which includes a program memory composed of an electrically programmable read only memory, the program memory including a first region assigned for storing programs and a second region assigned for storing at least two bits of control information, and comprising means receiving the at least two bits of control information from the second region of the program memory for allowing a content of the first region of the program memory to be outputted from the data processor to an external device only when the at least two bits of control information stored in the second region of the program memory are different from each other.

With the above mentioned arrangement, after a program has been written to the first region of the program memory and the written program has been verified, control information bits having the same content is written to the second region of the program memory, so that the reading out of the first region of the program memory to an external device is certainly inhibited thereafter.

Assuming that each memory cell of the electrically programmable read only memory constituting the program memory is composed of a N-channel floating gate transistor, when the control information bits having the same content is written to the second region of the program memory, at least two cell transistors corresponding to the second region of the program memory are caused to have the second threshold in accordance with the above mentioned example. Therefore, if the ordinary reading voltage is applied to these cell transistors, all the information read out of these cell transistors will be "0". On the other hand, if a reading voltage higher than the second threshold voltage is applied to these cell transistors, all the information read out of these cell transistors will be "1". Therefore, the reading out of the program to an external device is inhibited, and accordingly protected.

In addition, with the above mentioned arrangement, it it sufficient if the information stored for the program reading control in the verification mode is two bits. The stored information may includes three or more bits, but third and succeeding bits of the three or more bits do not have a substantial meaning. Therefore, a number of bits as in the case of a passwords are not required, and there is no nature that it will be solved or analyzed someday as in the case of the password.

The above and other objects, features and advantages of the present invention will be apparent from the following description of preferred embodiments of the invention with reference to the accompanying drawings.

Brief Description of the Drawings

Figure 1 is a block diagram of an embodiment of the data processor in accordance with the present invention;

Figure 2 is a logic circuit diagram of the verification enable detection circuit included in the data processor shown in Figure 2;

Figure 3 is a logic circuit diagram of the address control circuit of the data processor shown in Figure 2;

Figure 4 illustrates an example of an address map of the PROM included in the data processor shown in Figure 2;

Figure 5A is an equivalent circuit diagram of one PROM cell; and Figure 5B is a graph illustrating the $V_{GS}$-$I_D$ characteristics of a written cell transistor and an unwritten cell transistor.

Description of the Preferred embodiments

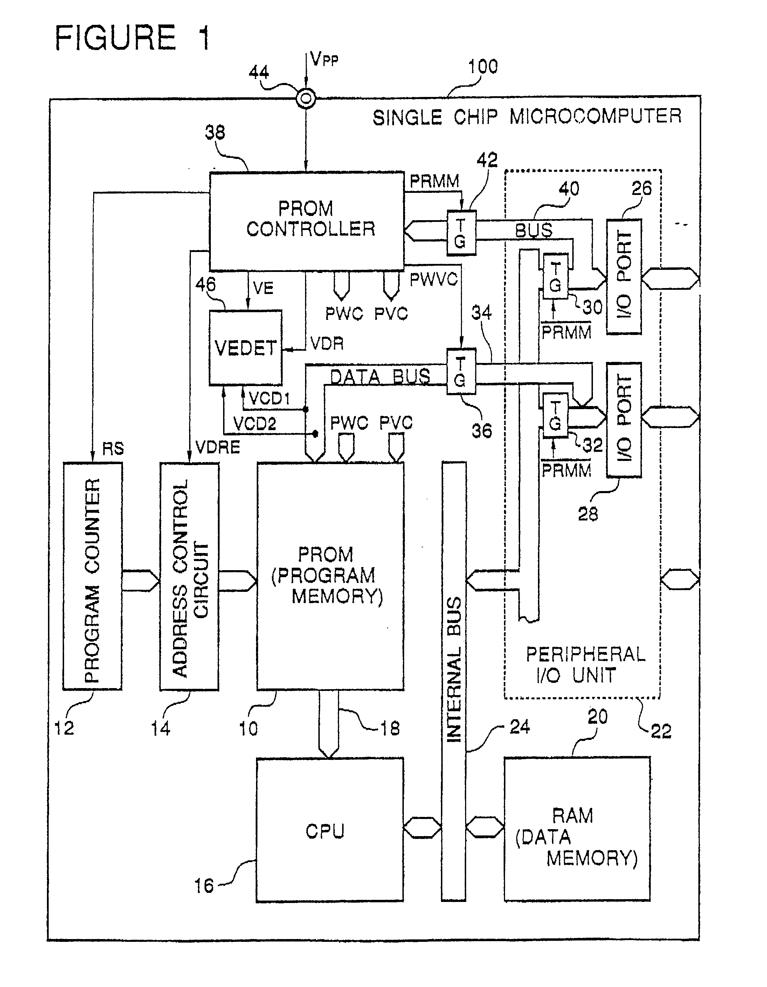

Referring to Figure 1, there is shown a block diagram of a single chip microcomputer which embodies the present invention. The shown single chip microcomputer, generally indicated by Reference Numeral 100, is fabricated on a single semiconductor substrate in the form of an integrated circuit, and includes a program memory 10 composed of a PROM for storing a program constituted of a sequence of instructions. This PROM 10 receives an address designation from a program counter 12 through an address control circuit 14, and operates to supply an instruction stored at a location designated by the received address, to a CPU (central processing unit) 16 through an instruction bus 18, so that the CPU executes the given instruction. As will be explained hereinafter, the address control circuit 14 operates to output an output of the program counter 12 to the PROM 10 without modification when it does not receives an address control signal VDRE.

Furthermore, the microcomputer 100 includes a data memory 20 composed of a RAM (random access memory) and a peripheral input/output unit 22, which are coupled together with the CPU 16 to an internal bus 24. The peripheral input/output unit 22 includes two input/output ports 26 and 28 and other not-shown input/output ports, an analog digital converter, an serial data transfer unit, etc. (not shown). The two input/output ports 26 and 28 are coupled through transfer gates 30 and 32 to the internal bus 24, respectively.

In a normal operation, the input/output port 28 functions as a data transfer (data sending and receiving) port between the microcomputer 100 and an external device. In a program mode for writing a program into the PROM 10 and verifying the program written in the PROM 10, the input/output port 28 functions operate as a buffer for program transfer (program receiving and sending). For the latter purpose, a data bus 34 is provided between the input/output port 28 and the PROM 10, and a transfer gate 36 is inserted in series in the data bus 34.

The microcomputer 100 also includes a PROM controller 38 or controlling a writing of a program into the PROM 10 and a verification of the program written in the PROM 10. The input/output port 26 functions, under the normal operation, as a data transfer (data sending and receiving) port between the microcomputer 100 and an external device. The input/output port 2 also functions as a buffer for receiving an operation command for the PROM controller 38. For this purpose, a bus 40 is provided between the input/output port 26 and the PROM controller 38, and a transfer gate 42 is inserted in series in the bus 40. The transfer gate 42 is controlled by a PROM mode signal PRMM from the PROM controller 38, and the transfer gates 30 and 32 are controlled by a signal $\overline{PRMM}$ which is an inverted signal of the PROM mode signal PRMM. The PROM mode signal PRMM outputted from the PROM controller 38 is brought to an active high level when a voltage applied to a terminal 44 becomes higher than a normal supply voltage (for example 5V), namely, 12.5 V for example. The transfer gate 36 is controlled by a signal PWVC, which is generated on the basis of the PROM mode signal PRMM and a verification enable signal VE generated by a verification enable detection circuit (VEDET) 46. This verification enable detection circuit 46 is connected to receive the most signficant bit (MSB) VCD1 and a next signficant bit VCD2 of data read out of the PROM 10, and operates to respond to a signal VDR from the PROM controller 38 so as to bring the verification enable signal VE to the active high level only when the most significant hit VCD1 and the next significant bit VCD2 of the data read out of the PROM 10 are different from each other.

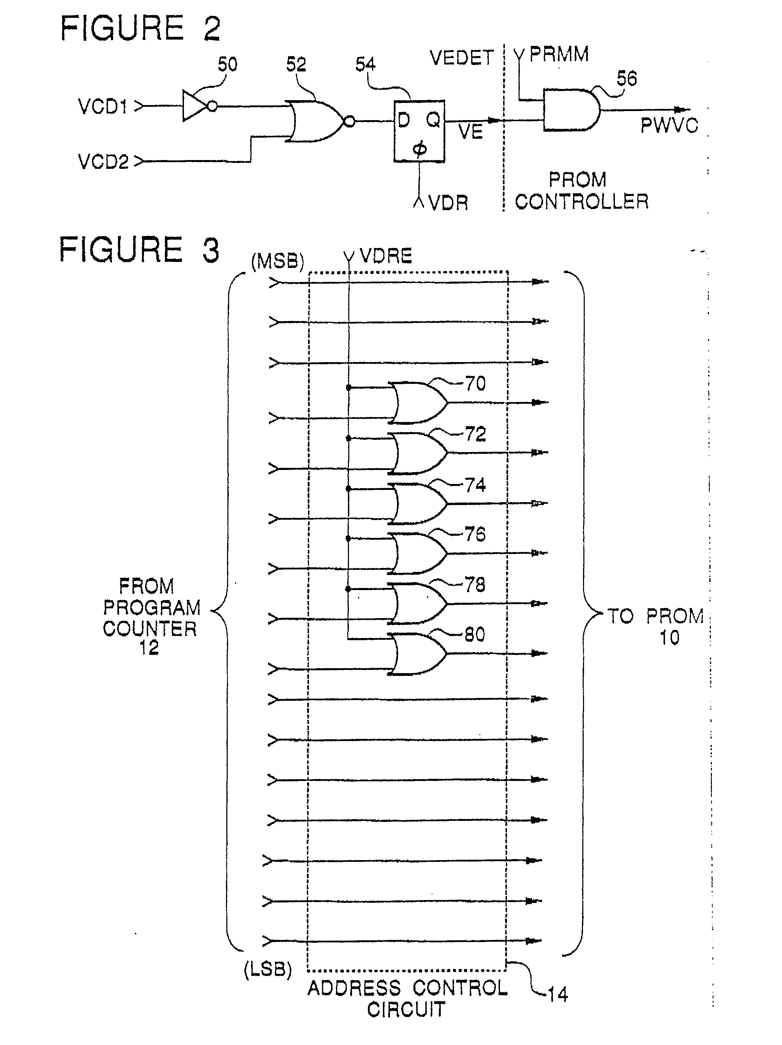

Referring to Figure 2, there is shown a logic circuit diagram of the circuit the verification enable detection circuit 46 and a portion of the PROM controller 38 for generating the signal PWVC. The verification enable detection circuit 46 includes an inverter 50 connected to receive the most significant bit VCD1 of the data read out of the PROM 10, and a NOR gate 52 connected to receive an output of the inverter 50 and the next significant bit VCD2 of the data read out of the PROM 10. An output of the NOR gate 52 is connected to an data input of a D-type flipflop 54 having a clock input $\phi$ connected to receive the signal VDR from the PROM controller 38. Therefore, when the signal VDR from the PROM controller 38 is active, the output of the NOR gate 52 is latched in the flipflop 54. A Q output of the flipflop 54 is supplied as the verification enable signal VE to a first input of an AND gate 56 located in the PROM controller 38. The AND gate 56 has a second input connected to receive the PROM mode signal PRMM generated within the PROM controller 38, and an output of the AND gate 56 is supplied as the signal PWVC.

In the shown embodiment, the combination of the most significant bit VCD1 and the next significant bit VCD2 different from each other is that the former is "1" and the latter is "0". In this combination, when the most significant bit VCD1 and the next significant bit VCD2 are "1" and "0", respectively, the NOR gate 52 outputs a high level signal, which is latched in the flipflop 54 in response to the active signal VDR from the PROM controller 38, so that the verification enable signal VE of an active high level is generated. In addition, when the verification enable signal VE is at the active high level, and when the PROM mode signal PRMM generated by the PROM controller 38 is at a high level the signal PWVC for controlling the transfer gate 36 is brought to a high level.

Returning to Figure 1, in response to a command supplied through the input/output port 26, the PROM controller 38 generates a sequence of write signals PWC and a sequence of read signals PVC for verification. In the shown embodiment, both of a program writing address and a reading address for verification are commonly generated by the program counter 12. Namely, the program counter 12 is initialized by a reset signal RS from the PROM controller 38, and is incremented, one by one, each time a one instruction writing completion signal (not shown) is generated.

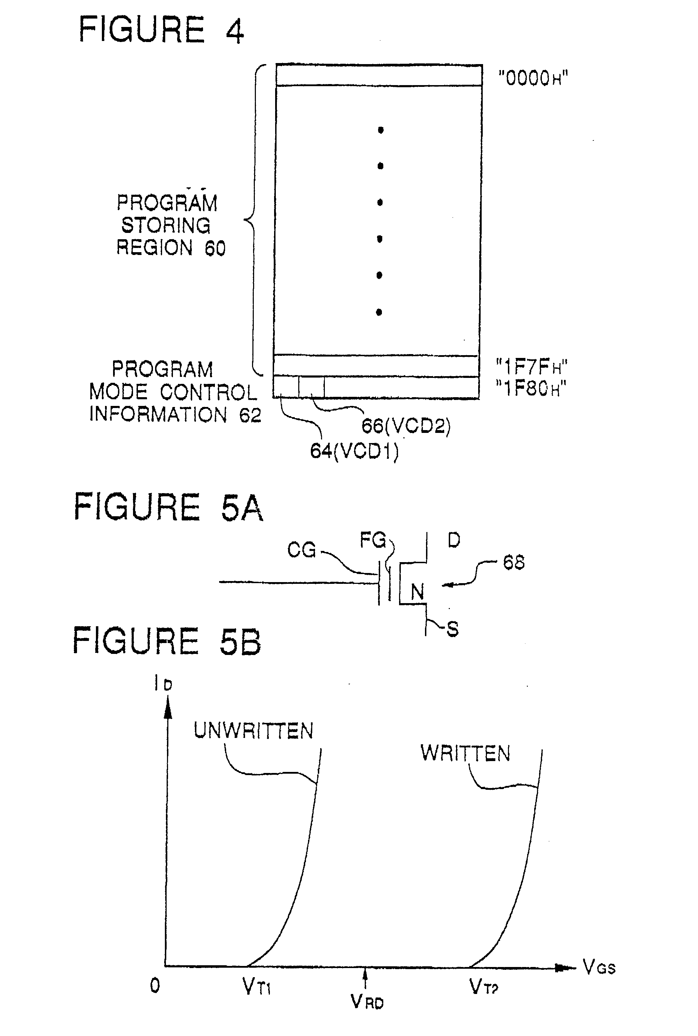

Referring to Figure 4, there is shown a storing area of the PROM 14, which is divided into a first region 60 for storing a program, and a second region 62 for storing two bits of program control information VCD1 and VCD2. In the shown embodiment, the first region 60 is assigned with addresses starting from an address "$0000_H$" and terminating at an address "$1F7F_H$", where the suffix "H" is indicative of a hexadecimal notation, and the second region 62 includes an address "$1F80_H$". The two bits of program control information VCD1 and VCD2 are stored in the most significant bit 64 and a next significant bit 66 of a memory location of the address "$1F80_H$".

Each memory cell of the PROM 10 is constituted of an N-channel floating gate field effect transistor 68 including a control gate CG, a floating gate FG, a drain D and a source S, as shown in Figure 5A. This cell transistor can be brought into a condition storing a bit of data "1", by injecting electrons into the floating gate FG, namely putting it into a written condition. Namely, an unwritten cell transistor has a first threshold voltage $V_{T1}$ (1 V to 2 V), as shown in the $V_{GS}$-$I_D$ characteristics of Figure 5B, while a written cell transistor has a second threshold voltage $V_{T2}$ (10 V to 20 V). Accordingly, if a reading voltage $V_{RD}$ is set to a level which is middle between the first threshold voltage $V_{T1}$ and the second threshold voltage $V_{T2}$, items of stored data "1" and "0" can be discriminated upon whether the cell transistor is turned on or off when the reading voltage is applied. Since an ordinary supply voltage is 5 V, this supply voltage is used as the reading voltage.

Returning to Figure 1, when the program counter 12 is initialized by the reset signal RS, the PROM controller generates the address control signal VDRE to the address control circuit 14. In response to this address control signal VDRE, the address control circuit 14 operate to modify an address "$0000_H$" outputted from the initialized program 12, into "$1F80_H$", and outputs the modified address "$1F80_H$" to the PROM 10. Therefore, the address control circuit 14 can be constituted as shown in Figure 3. Namely, the address control circuit 14 includes OR gates 70 to 80 for respectively receiving at their one input a fourth bit counted from the MSB bit of the address outputted from the program counter 12 to a ninth bit also counted from the MSB bit of the address. The other bits of the address outputted from the program counter 12 are outputted directly to the PROM as they are. The other input of each of the OR gates 70 to 80 is connected to receive the address control signal VDRE. Respective outputs of the OR gates 70 to 80 are outputted as fourth to ninth significant bits of an address to be supplied to the PROM 10. As a result, when the program counter 12 is initialized, the address control circuit responds to the address control signal VDRE so as to output "$1F80_H$" to the PROM 10.

The PROM controller 38 generates the read control signal PVC and the signal VDR. In response to these signals, the address "$1F80_H$" of the PROM 10 is read out, and the two bits of control information VCD1 and VCD2 stored in the two memory cells 64 and 66 of the address "$1F80_H$" are supplied to the verification enable detection circuit 46, so that the circuit 46 determines the verification enable signal VE on the basis of the two bits of control information VCD1 and VCD2.

The above mentioned microcomputer 100 is supplied to a user in the form that two bits of control information "1" and "0" are respectively written in the two memory cells 64 and 66 of the address "$1F80_H$" of the PROM 10. As well known, a writing of a program to a PROM is executed by using a PROM writer. If the shown microcomputer 100 is set into the PROM writer, the PROM writer supplies a writing voltage Vpp to the terminal 44 of the microcomputer 100. In response to this voltage application, the PROM controller 38 brings the program mode signal PRMM to the active high level, so that the transfer gate 42 is opened and the transfer gates 30 and 32 are closed. Thereafter, the PROM writer supplies a rest command through the input/output port 26 to the PROM controller 38. In response to the reset command, the PROM controller 38 generates the reset signal RS to the program counter 12 so as to initialize the program counter 12. The PROM controller 38 also generates the signals VDRE, VDR and PVC in the form of a one-shot pulse. As a result, the address "$1F80_H$" is read out of the PROM 10, and the two bits of control information VCD1 and VCD2 are discriminated by the verification enable detection circuit 46. At this time, since these two bits of control information VCD1 and VCD2 are "1" and "0", respectively, the verification enable detection circuit 46 generates the verification enable signal VE of the active high level. Therefore, the signal PWVC is brought to the high level, so that the transfer gate 36 is opened. With is, it becomes possible to write a program into the PROM and to read the program written in the PROM for verification.

A program is written to the PROM 10 through the input/output port 28 and the data bus 34, and in the verification mode, the program written in the PROM 10 is outputted through the data bus 34 and the input/output port 28 so as to be verified. Thereafter, the content of the program counter 12 is finally incremented to the address "$1F80_H$". At this time, a data "1" is written to the memory cell 66. Namely, the bit VCD2 of control information is changed from "0" to "1". With this, a processing necessary for the program protection has been completed.

In order to plagiarize the program by using the verification mode, an unauthorized person would set the microcomputer 100 to the PROM writer so that the PROM writer supplies the voltage Vpp to the terminal 44 and also supplies the reset command to the PROM controller 38. As a result, the two bits of control information VCD1 and VCD2, both of which are "1", are read out of the PROM 10. Therefore, the verification enable signal VE outputted from the flipflop 54 is brought to "0". Accordingly, the transfer gate 36 is maintained in a closed condition of disconnecting the direct coupling between the input/output port 28 and the PROM 10. Namely, even if the verification mode command is supplied to the PROM controller 38, the program stored in the PROM 10 will never outputted to an external. In addition, even if the voltage supply voltage for the microcomputer 100 is made equal to or higher than the second threshold voltage $V_{T2}$, since both of the two bits of control information VCD1 and VCD2 then read out of the PROM 10 will be brought to "0", the verification enable signal VE outputted from the verification enable detection circuit 46 is also brought to "0". Therefore, the transfer gate 36 is maintained in the closed condition.

As seen from the above, the shown microcomputer 100 can give a substantially perfect program protection with provision of only two bits of control information for the program protection.

In the above mentioned embodiment, the two bits of control information VCD1 and VCD2 are used. In this connection, it is sufficient if it is allowed to output the program to an external when at least two bits of control information are different from each other. It is possible to use three or more bits for the control information.

The inverter 50 and the NOR gate 52 shown in Figure 2 can be replaced with an exclusive NOR gate. In addition, in the shown embodiment, the address for writing a program to the PROM is generated by the program counter, but can be obtained from an external device. The data bus 34 is bidirectional, but can be replaced with a bus exclusively used for a program writing and anther bus exclusively used for a program reading. The transfer gate 36 is provided as a means for preventing the program from being outputted to an external. The means for preventing the program from being outputted to the external can be realized by inhibiting generation of the reading control signal PVC, or by bringing the input/output port 28 into a high impedance condition.

As will be apparent from the above, the microcomputer in accordance with the present invention is characterized in that there is provided a memory means for storing at least two bits of control information, in addition to a memory region for storing a program, so that it is allowed to output the program to an external only when at least two bits of control information are different from each other. Therefore, a microcomputer giving a substantially perfect program protection can be obtained.

The invention has thus been shown and described with reference to the specific embodiments. However, it should be noted that the present invention is in no way limited to the details of the illustrated structures but changes and modifications may be made.

## Claims

1. A data processor which includes a program memory composed of an electrically programmable read only memory, comprising memory means for storing at least two bits of control information, and means receiving said at least two bits of control information from said program memory for allowing an outputting of a content of the program memory from the data processor to an external device only when said at least two bits of control information stored in said program memory are different from each other.

2. A data processor claimed in Claim 1 wherein said memory means for storing at least two bits of control information is composed of one address of said program memory.

3. A data processor claimed in Claim 1 wherein said memory means for storing at least two bits of control information is composed of a portion of a memory location corresponding to one address of said program memory.

4. A data processor claimed in Claim 1 wherein said means for allowing the outputting of the content of the program memory from the data processor to the external device includes a program memory controller having a terminal receiving a program writing voltage, said program memory controller operating, when said program writing voltage is applied to said terminal, to read a content of said memory means and to inhibit an outputting of the content of the program memory from the data processor to the external device if said at least two bits of control information stored in said program memory are not different from each other.

5. A data processor claimed in Claim 4 wherein said memory means for storing at least two bits of control information is composed of one predetermined address of said program memory, and wherein said program memory controller operates, when said program writing voltage is applied to said terminal, to supply said one predetermined address to said program memory so as to read a content of said one predetermined address of said program memory and to inhibit an outputting of the content of the program memory from the data processor to the external device if said at least two bits of control information stored in said one predetermined address of said program memory are not different from each other.

6. A data processor claimed in Claim 5 wherein when said program writing voltage is applied to said terminal, said program memory controlling means is coupled to a first input/output port so as to receive a program transfer command through the first input/output port, and in response to the program transfer command, said program memory controlling means discriminates the content of said one predetermined address of said program memory.

7. A data processor which includes a program memory composed of an electrically programmable read only memory, the program memory including a first region assigned for storing programs and a second region assigned for storing at least two bits of control information, and comprising means receiving said at least two bits of control information from the second region of the program memory for allowing a content of the first region of the program memory to be outputted from the data processor to an external device only when said at least two bits of control information stored in the second region of the program memory are different from each other.

# FIGURE 1

# FIGURE 2

# FIGURE 3

# FIGURE 4

PROGRAM
STORING
REGION 60

PROGRAM
MODE CONTROL
INFORMATION 62

"0000H"

"1F7FH"
"1F80H"

66(VCD2)

64(VCD1)

# FIGURE 5A

CG — FG — D

68

N

S

# FIGURE 5B

I D

UNWRITTEN

WRITTEN

0   V T1   V RD   V T2   V GS